(19) Europäisches Patentamt
European Patent Office
Office européen des brevets

(11) Publication number: **0 444 633 A2**

(12) # EUROPEAN PATENT APPLICATION

(21) Application number: **91102926.2**

(22) Date of filing: **27.02.91**

(51) Int. Cl.5: **C08G 77/16**, C08G 77/06, C08J 3/12

(30) Priority: **28.02.90 JP 48459/90**

(43) Date of publication of application: **04.09.91 Bulletin 91/36**

(84) Designated Contracting States: **DE FR GB**

(71) Applicant: **DOW CORNING TORAY SILICONE COMPANY, LIMITED**
**Mitsui Building No. 6,**
**2-3-16,Nihonbashi-Muromachi**
**Chuo-ku Tokyo 103(JP)**

(72) Inventor: **Shimizu, Koji**
**25-14, 4-chome, Aobadai**
**Ichihara-shi, Chiba Prefecture(JP)**
Inventor: **Yoshida, Keiji**
**6, 1-chome, Yushudai Nishi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) **Polyorganosiloxane-based elastomer powder and method for its preparation.**

(57) A polyorganosiloxane elastomer powder having alcoholic hydroxyl group indirectly bonded to a portion of the silicon atoms in said polyorganosiloxane is preferably produced by a method which mixes a polyorganosiloxane having at least 2 hydroxyl groups, organohydrogenpolysiloxane having at lest 2 silicon-bonded hydrogen atome per molecule, curing catalyst, and alcoholic hydroxyl group-containing organosilane to give a composition, then emulsifies the composition, then brings the emulsion into a gas or liquid having a temperature higher than that of the emulsion to cure the composition and separates the cured composition from the water.

EP 0 444 633 A2

Polyorganosiloxane-based elastomer powders have recently entered into use as additives for modifying and improving various types of organic resins, for example, as internal-stress relievers or impact-strength improvers for hard, brittle organic resins and as water-resistance improvers.

The present invention takes as its object the introduction of a novel polyorganosiloxane-based elastomer powder and a method for the preparation of same. The present invention seeks to introduce a novel polyorganosiloxane-based elastomer powder which is highly compatible and dispersible with regard to compositions whose dispersion medium is water (water-based paints, rubber latexes, cement compositions, and so forth) and with regard to other materials of a different nature, for example, vegetable oils such as linseed oil and mineral oils such as process oil, and which is therefore highly qualified as an agent for modifying and improving the physical properties of such materials.

This invention is to a polyorganosiloxane elastomer powder which has an alcoholic hydroxyl group indirectly bonded to a portion of the silicone atoms in the polymer is highly compatable and dispersable with regard to both water based and oil based compositions.

A preferred polyorganosiloxane elastomer powder of this invention is prepared by a method consisting of first mixing (A) polyorganosiloxane having at least 2 silicon-bonded hydroxyl groups in each molecule, (B) polyorganohydrogensiloxane having at least 2 silicon-bonded hydrogen atoms in each molecule, (C) curing catalyst, and (D) alcoholic hydroxyl group-containing organosilane with the following general formula

$$HO - R - \overset{R^1_n}{\overset{|}{Si}} (OR^2)_{3-n}$$

where R is an alkylene group, $R^1$ is a monovalent hydrocarbon group, $R^2$ is the hydrogen atom or a monovalent hydrocarbon group which may be identical to or different from $R^1$, and $n$ is an integer with a value of zero to 2) or the partial hydrolyzate thereof, to give a composition; then emulsifying the composition in water to prepare an emulsion in which said composition is dispersed as the discontinuous phase in the water; then bringing this emulsion into contact with a gas or liquid residing at a temperature higher than that of the emulsion; and allowing the composition to cure.

To explain the preceding in greater detail, the polyorganosiloxane-based elastomer powder according to the present invention comprises a rubbery elastic powder whose main or principal component is polyorganosiloxane, and it is essential that the alcoholic hydroxyl group be indirectly bonded to a portion of the silicon atoms in this polyorganosiloxane.

The concept of the indirectly bonded alcoholic hydroxyl group excludes hydroxyl groups which are directly chemically bonded to the silicon atoms in the polyorganosiloxane, but rather denotes hydroxyl groups which are chemically bonded to the polyorganosiloxane through the intermediary of a hydrocarbon group such as an alkylene group (for example, methylene, ethylene, propylene, etc.) or the phenylene group.

No specific restraint is placed on the bonding level for the alcoholic hydroxyl group. However, when too little is present, one encounters a decline in the compatibility with the various types of materials of a different nature as described abpve. When too much is present, the polyorganosiloxane elastomer-derived properties are compromised and preparation of the powder itself also becomes problematic. As a consequence, its bonding level as a general matter should fall within the range of 1 to 1,000 per 10,000 silicon atoms in the polyorganosiloxane.

On the topic of the polyorganosiloxane elastomer which constitutes the polyorganosiloxane-based elastomer powder under consideration, this polyorganosiloxane elastomer comprises those rubbers known as silicone elastomers and silicone rubbers. Examples in this regard are as follows:
organoperoxide-curing silicone rubbers in which vinyl-containing polydiorganosiloxane is cured by organoperoxide; addition reaction-curing silicone rubbers in which curing is induced via a platinum compound-mediated addition reaction between polydiorganosiloxane containing silicon-bonded vinyl groups and SiH-containing polydiorganosiloxane; condensation reaction-curing silicone rubbers in which curing is effected by an organotin compound-mediated dehydrogenation reaction between polydiorganosiloxane having the hydroxyl group at both molecular chain terminals and SiH-containing polydiorganosiloxane; and condensation reaction-curing silicone rubbers which cure by a condensation reaction, in the presence of an organotin compound or titanate ester, between polydiorganosiloxane having the hydroxyl group at both molecular chain terminals and hydrolyzable organosilane.

Among the preceding, condensation reaction-curing silicone rubbers are preferred within the context of

the present invention due to the associated ease of handling and ease of preparation of the polyorganosiloxane-based elastomer powder of the present invention.

The partiole diameter of the present invention's polyorganosiloxane-based elastomer powder preferably does not exceed 1 mm and more preferably does not exceed 0.1 mm. Particle diameters in excess of 1 mm cause a reduction in the dispersibility in other materials of a different nature, which results in a reduction in the capacity to improve and modify the physical properties of said other materials of a different nature. The morphology or form of the polyorganosiloxane-based elastomer powder will vary with the type or nature of the material being modified as well as the physical property targeted for improvement and/or modification, and therefore is not specifically restricted. However, more or less spherical morphologies are preferred in order to facilitate blending and obtain a good dispersibility.

A large number of methods can be contemplated for the method for preparing the polyorganosiloxane elastomer of the present invention, but a particularly preferred method within the context of the present invention uses a liquid silicone rubber composition which consists of (A) polyorganosiloxane having at least 2 silicon-bonded hydroxyl groups in each molecule, (B) organohydrogenpolysiloxane having at least 2 silicon-bonded hydrogen atoms in each molecule, (C) curing catalyst, and (D) alcoholic hydroxyl group-containing organosilane with the following general formula

$$HO - R - \overset{\overset{\displaystyle R^1_n}{|}}{Si}(OR^2)_{3-n}$$

in which R is an alkylene group, $R^1$ is a monovalent hydrocarbon group, $R^2$ is the hydrogen atom or a monovalent hydrocarbon group which may be identical to or different from $R^1$, and n is an integer with a value of zero to 2) or the partial hydrolyzate thereof. The composition is dispersed in water to prepare a dispersion in which said composition is dispersed as the discontinuous phase in the water; and this dispersion is subsequently brought into contact with a gas or liquid residing at a temperature higher than that of the aforesaid water to cure the liquid silicone rubber composition.

To explain the preceding in greater detail, the aforesaid component (A) is the component which functions to develop rubbery elasticity through a dehydrogenation reaction-based cure with component (B) under the catalytic activity of component (C). This component (A) comprises polyorganosiloxane which contains at least 2 silicon-bonded hydroxyl groups in each molecule. While the bonding position for said hydroxyl groups is not specifically restrained, their presence at both terminals is preferred. The other, silicon-bonded organic groups should comprise unsubstituted or substituted monovalent hydrocarbon groups, as exemplified by alkyl groups such as methyl, ethyl, propyl, butyl; alkenyl groups such as allyl; aryl groups such as phenyl; aralkyl groups such as benzyl; cycloalkyl groups such as cyclohexyl and cyclopentyl; and the preceding groups in which part or all of the hydrogen atoms has been replaced by halogen (fluorine, chlorine,bromine), for example, 3-chloropropyl and 3,3,3-trifluoropropyl. In general, these organic groups will be methyl, vinyl, and phenyl. Furthermore, it is not necessary that all such groups be identical, but rather combinations of different types of organic groups may be deployed. The molecular structure is preferably essentially straight chain, which means either straight chain or moderately branched straight chain. In addition, while the molecular weight is not specifically restricted, molecular weights of at least 3,000 are preferred due to the excellent physical properties of the corresponding silicone rubber particulate. The polyorganosiloxane under consideration is concretely exemplified as follows: hydroxy-terminated dimethylpolysiloxanes, hydroxy-terminated dimethylsiloxane-methylphenylsiloxane copolymers, hydroxy-terminated methylvinylpolysiloxanes, and hydroxy-terminated dimethylsiloxane-methylvinylsiloxane copolymers.

Methods for the synthesis of these polyorganosiloxanes are well known, and are exemplified by the ring-opening polymerization of polyorganosiloxane cyclics; hydrolysis of linear or branched polyorganosiloxane which contains hydrolyzable groups such as alkoxy, acyloxy, etc.; and hydrolysis of one or more species of dipolyorganosiloxane.

Component (B) functions as a crosslinker for component (A), and the component (B) under consideration comprises organohydrogenpolysiloxane which contains at least 2 silicon-bonded hydrogen atoms in each molecule. The hydrogen atoms can be bonded at the molecular terminals or as side groups or at both positions. The silicon-bonded organic groups will comprise monovalent hydrocarbon groups as exemplified by alkyl groups such as methyl, ethyl, propyl, and octyl; by aryl groups such as phenyl; and by substituted alkyl groups such as 3,3,3-trifluoropropyl. Aliphatically unsaturated hydrocarbon groups may not be present.

The molecular structure will ordinarily be straight chain or cyclic, but branched and network molecular structures are permissible. Either a single species or type or mixtures of two or more types may be employed.

The organohydrogenpolysiloxane under consideration is selected from those with viscosities at 25 degrees Centigrade within the range of 1 to 1,000,000 centipoise. At below 1 centipoise, the volatility becomes so high that the content of component (B) in the silicone rubber composition becomes unstable. Values in excess of 1,000,000 centipoise cause a substantial decline in the industrial productivity. The proportion of hydrogen atoms within the individual organohydrogenpolysiloxane molecule preferably does not exceed 2 weight percent. Component (B) is admixed generally within the range of 0.1 to 50 weight parts per 100 weight parts component (A).

Component (C) is a curing catalyst, and it functions to accelerate the condensation reaction between components (A) and (B). It is exemplified by the metal salts of organic acids such as dibutyltin dilaurate, dibutyltin diacetate, tin octanoate, dibutyltin dioctate, tin laurate, ferric stannooctanoate, lead octanoate, lead laurate, and zinc octanoate; by titanate esters such as tetrabutyl titanate, tetrapropyl titanate, and dibutoxytitanium bis(ethyl acetoacetate); by amine compounds such as n-hexylamine, guanylic acid esters, guanidine,and their hydrochlorides; and by platinum-type compounds such as chloroplatinic acid, chloroplatinic acid dissolved in alcohols or ketones, complexes between chloroplatinic acid and diketones, platinum black, and platinum supported on a carrier.

With regard to the quantity of addition for component (C), this should generally be 0.01 to 5 weight parts and preferably is 0.05 to 2 weight parts per 100 weight parts component (A) for the aforementioned metal salts of organic acids, titanate esters, and amine compounds. This addition should generally fall within the range of 0.1 to 1,000 weight parts as platinum metal and preferably 1 to 100 weight parts as platinum metal per 1,000,000 weight parts of the total quantity of components (A) plus (B).

Component (D) comprises alcoholic hydroxyl group-containing organosilane of the formula

$$HO - R - \overset{R^1_n}{\overset{|}{Si}}(OR^2)_{3-n}$$

and the partial hydrolyzate thereof. The group R in the preceding formula consists of alkylene groups such as methylene, ethylene, propylene, butylene, etc., while the group $R^1$ consists of monovalent hydrocarbon groups as typified by the phenyl group and alkyl groups such as methyl, ethyl, propyl, etc. The group $R^2$ comprises the hydrogen atom and monovalent hydrocarbon groups which may be identical to or different from $R^1$. Moreover, n is an integer with a value of zero to 2.

Examples of the component (D) preferred are gamma-hydroxypropyltrimethoxysilane, gamma-hydroxypropyltriethoxysilane, and partial hydrolyzates of the preceding.

This component should be added generally at 0.05 to 15 weight parts and preferably at 0.1 to 10 weight parts per 100 weight parts component (A).

In addition to components (A) through (D), the liquid silicone rubber composition used in the method under consideration may contain various fillers in order to adjust the fluidity and/or improve the mechanical strength of its moldings. Examples in this regard are reinforcing fillers such as precipitated silica, fumed silica, calcined silica, and fumed titanium oxide, and nonreinforcing fillers such as quartz powder, diatomaceous earth, asbestos, aluminosilicic acid, iron oxide, zinc oxide, and calcium carbonate. Also useable are the preceding fillers after surface treatment with an organosilicon compound such as hexamethyldisilazane, trimethylchlorosilane, or polymethylsiloxane.

Any of the following methods may be employed within the context of the present invention in order to disperse the aforesaid liquid silicone rubber composition into water: separate introduction of each of components (A) through (D) into water followed by dispersion in the water; preliminary preparation of a mixture of components (A), (B), and (D), introduction and dispersion of this mixture into water, subsequent introduction of component (C); and preliminary reparation of a mixture of components (A) through (D) and dispersion of this mixture in water. The latter 2 methods are generally preferred.

This dispersion can be formed through various methods. In one such method, the liquid silicone rubber composition is first prepared beforehand by mixing components (A) through (D). This composition is subsequently added to water, and passage through a commercial colloid mill then affords a water-based dispersion of the silicone rubber composition. Otherwise, components (A) through (D) may be placed as such in a homomixer, water is then added, and a dispersion is generated by stirring.

Surfactant can be used in these methods in order to improve the dispersibility of the silicone rubber composition and support the development of a micropowder with a uniform particle diameter. In this case, an emulsion of the liquid silicone rubber composition is prepared by introducing the liquid silicone rubber composition into surfactant-containing water at zero to 25 degrees Centigrade followed by emulsification.

Again, the emulsion under consideration can be produced by a variety of methods. In one such method, water and surfactant are added to the liquid silicone rubber composition, and this is processed in an emulsifying device, for example, a commercial homomixer, homogenizer, colloid mill, etc., to prepare the emulsion. Alternatively, components (A) through (D) are introduced into a homomixer, the surfactant is added at once with mixing, and the water is then added with stirring in order to develop the emulsion. The surfactant used here is not specifically restricted and will encompass those nonionic and ionic surfactants and emulsifying agents known from the art for the formation of water-based silicone emulsions. However, surfactants which react with the silicon-bonded hydrogen atoms in component (B) or which contain atoms or functional groups which impair its activity should be avoided. The surfactant should be used generally within the range of 2 to 30 weight parts per 100 weight parts component (A).

It is preferred for the present invention that this process be carried out within the temperature range of zero to 25 degrees Centigrade. The water will freeze at below zero degrees Centigrade, which will prevent formation of the dispersion. The process of forming the silicone rubber composition dispersion becomes unstable at temperatures in excess of 25 degrees Centigrade, with the result that the morphology of the ultimately obtained powder becomes nonuniform or inhomogeneous.

In order to bring curing of the silicone rubber composition to completion, the method under consideration then proceeds to bring the thus obtained water-based dispersion of the liquid silicone rubber composition into contact with a gas or liquid residing at a temperature higher than that of the water in said dispersion. When this curing temperature is below the temperature of the water constituting the dispersion, the curing rate of the silicone rubber composition used by the present invention declines and the object of the present invention cannot be achieved. The temperature of this gas or liquid preferably is at least 50 degrees Centigrade. No particular restriction is placed on the liquid to be used, and it need merely be a liquid which is capable of thermosetting the liquid silicone rubber composition in the dispersion. However, liquids which inhibit curing of the liquid silicone rubber composition and good solvents for the liquid silicone rubber composition should be avoided. Preferred liquids are exemplified by water, liquid paraffin, waxes, and the various fluid compounds employed as thermal media (e. g., dimethylsilicone oils, phthalate esters, etc.). Water is particularly preferred among these for its high heat capacity and ease of handling. Nor is the gas used by the present invention particularly restricted, and it need merely be a gas which can promote the thermosetting of the liquid silicone rubber composition present in the dispersion. Flammable gases should be avoided. This gas is concretely exemplified by air, nitrogen, and the various types of nonflammable gases.

Various methods are available for completing the cure of the liquid silicone rubber composition by contacting the dispersion with a gas or liquid residing at a temperature higher than the water temperature of the dispersion. For example, curing can be brought to completion by simply maintaining the dispersion in hot air or by spraying the dispersion into hot air. In another method, the dispersion is continuously and gradually introduced into a stirrer-equipped mixer filled with hot water maintained at a specified temperature, and a continuous contact and dispersion is achieved by stirring. Alternatively, the liquid may be introduced into the dispersion with stirring.

The polyorganosiloxane-based elastomer powder according to the present invention may be employed as such by itself or in combination with another material of different nature. In the case of combination with another material of different nature, it functions to modify/improve the physical properties (e. g., lubrication properties, fluidity, mechanical strength, water resistance, etc.) of the various types of material with which it may be blended.

With regard to this latter case, the following are provided as examples of application substrates or matrices for the polyorganosiloxane-based elastomer powder of the present invention, but of course these should not be construed as limiting: water-based paints, rubber latexes, cement compositions, various types of vegetable oils such as linseed oil and so forth, mineral oils such as process oil and so forth, water repellents, release agents, tack inhibitors, greases, casting materials, molding materials, films, and agrichemical and medical applications. In the case of admixture into polymeric or macromolecular materials, the recipient polymers are exemplified as follows: natural rubber, polychloroprene rubbers, polybutadiene rubbers, SBR, EPR, EPT rubbers, polyisoprene rubbers, polyisobutene rubbers, polyacrylate ester rubbers, polyurethane rubbers, butadiene-acrylonitrile copolymer rubbers, polyester rubbers, polysulfide rubbers, fluororubbers, silicone rubbers, copolymer rubbers of the preceding, and blends of the preceding rubbers. Recipient resins are exemplified as follows: various types of polyamides such as nylon-5, nylon-6, nylon-7,

nylon-8, nylon-9, nylon-10, nylon-11, nylon-12, nylon-6,6, and aromatic polyamides such as Kevlar; saturated polyesters as typified by polyethylene terephthalate, polybutylene terephthalate, poly(hydrogenated xylene terephthalate), polycaprolactone, and polypivalolactone; also, various thermoplastic, thermosetting, and high-energy radiation-curing (UV, gamma, electron beam, etc.) resins such as polycarbonate, ABS, AS, polystyrene, polyethylene, polypropylene, polybutadiene, polyvinyl chloride, polyvinylidene chloride, polyacrylonitrile, polyvinyl alcohol, polyvinyl acetate, polyvinyl butyral, polymethyl methacrylate, fluorine-containing resins, other polyolefin resins, polyethers (e. g., polyethylene glycol, polypropylene glycol, polytetrahydrofuran, Penton, polyphenylene oxide, and polyacetal), phenolic resins, polyurethane resins, acrylic resins, urea resins, unsaturated polyesters, melamine resins, phthalic acid resins, BT resins, polyimide resins, silicone resins, celluloid, acetylcellulose, epoxy acrylate, polyacrylate salts, and epoxy resins. Also included as examples are the block and random copolymers of the preceding resins and their blends. And of course, these resins may contain various types of inorganic fillers, glass fiber, carbon fiber, other fibrous fillers or reinforcing materials, heat-resistance improvers, weathering-resistance improvers, other stabilizers, modifiers, dyes, pigments, and so forth.

Because alcoholic hydroxyl groups are indirectly bonded to a portion of the silicon atoms in the polyorganosiloxane making up the polyorganosiloxane-based elastomer powder of the present invention, said polyorganosiloxane-based elastomer powder is characterized by an excellent compatibility and dispersibility with respect to compositions having water as the dispersion medium (e. g., water-based paints, rubber latexes, cement compositions, etc.) as well as with respect to other materials of a different nature such as vegetable oils (e. g. , linseed oil, etc.), mineral oils (e. g., process oil, etc.), and so forth.

The following examples are included for illustrative purposes only and should not be construed as limiting the invention which is properly set forth in the appended claims. In these examples, parts equals weight parts, and the viscosity is the value measured at 25 degrees Centigrade.

Compatibility and dispersibility testing was conducted as follows. First 50 grams of the particular liquid (linseed oil, mineral oil, water-based paint, etc.) was placed in a 500 cc beaker, and then 5 g of the silicone rubber powder was introduced from the top. This was followed by stirring with a glass rod, and the behavior of the silicone rubber powder during its admixture into the liquid was inspected visually during stirring.

Measurement of the quantity of liquid absorption was conducted as follows. One to five grams silicone rubber powder was placed on a glass plate (approximately 250 x 250 x 5 mm), and a small quantity of the particular liquid being tested (linseed oil, mineral oil, water-based paint, etc.) was dripped from a buret into the center of the silicone rubber powder. In each step, the entire mass was then thoroughly mixed by kneading with a spatula. This process of dropwise addition and mixing was repeated, and the end point was scored as the point immediately prior to the sudden onset of softness and adhesion to the glass plate due to a single drop of liquid. The quantity of liquid used up to the end point was determined, and the liquid absorption quantity (%) G was calculated using the following equation.

$$G = (H/S) \times 100$$

wherein: H = quantity of liquid in grams
S = weight of sample in grams

Example 1

First 100 parts hydroxy-terminated dimethylpolysiloxane with a viscosity of 2,000 centipoise, 16 parts hydroxy-terminated dimethylpolysiloxane with a viscosity of 50 centipoise (hydroxyl group content = 3.5 weight percent), and 10 parts silica micropowder with a specific surface of 200 $m^2/g$ were mixed for 1 hour with a Ross mixer. Then 6 parts gamma-hydroxypropyltrimethoxysilane ($HOC_3H_6Si(OCH_3)_3$) and 2 parts dibutyltin dioctoate were added to the preceding mixture followed by mixing to afford a mixture (A).

Then, 100 parts dimethylpolysiloxane with a viscosity of 2,000 centipoise, 16 parts dimethylpolysiloxane with a viscosity of 50 centipoise (hydroxyl group content = 3.5 weight percent), and 10 parts silica micropowder with a specific surface area of 200 $m^2/g$, in each case as described above, were mixed for 1 hour with a Ross mixer. A mixture (B) was prepared by the addition with mixing of 6 parts dimethylhydrogensiloxy-terminated methylhydrogenpolysiloxane with a viscosity of 10 centipoise (silicon-bonded hydrogen content = 1.5 weight percent).

Each of these mixtures (A) and (B) was transferred to a separate container and cooled to -10 degrees Centigrade.

Then 134 parts mixture (A) and 132 parts mixture (B) were introduced into a laboratory disperser (from Tokushu Kika Kogyo Kabushiki Kaisha) and mixed to homogeneity. Next, 16 parts surfactant (Tergitol TMN-6, nonionic surfactant from Union Carbide Corporation, ethylene oxide adduct of trimethylnonanol) and 800 parts ion-exchanged water were poured in, and a water-based dispersion of the polyorganosiloxane composition was obtained by mixing at 4,000 rpm with a mixing propeller.

This water-based dispersion was subsequently transferred to a colloid mill (from the Manton-Gaulin Company) and milled at 3,000 rpm on a 0.1 mm gap to afford a microparticulated water-based dispersion of the polyorganosiloxane composition.

This water-based microdispersion of the polyorganosiloxane composition was first allowed to stand for 5 hours at room temperature, and then, using a spray dryer from Ashizawa Niro Atomizer Kabushiki Kaisha, was sprayed into a dryer (inlet temperature maintained at 300 degrees Centigrade, outlet temperature maintained at 100 degrees Centigrade) to afford a cured powder. The obtained cured product was a rubbery elastic material with good surface lubrication characteristics, and proved to be a spherical powder with an average diameter of 15 micrometers when examined under the electron microscope.

This silicone rubber powder was tested for its compatibility, dispersibility, and liquid absorption versus various types of materials, and the obtained results are reported in Table 1.

For comparison, a silicone rubber powder was prepared as above without using the gamma-hydroxypropyltrimethoxysilane. The obtained silicone rubber particulate was a rubbery elastic material with good surface lubrication characteristics. Inspection under the electron microscope gave an average particle diameter of 15 micrometers (5 to 35 micrometers). This silicone rubber powder was tested as above for its compatibility, dispersibility, and liquid absorption versus various types of materials, and the obtained results are also reported in Table 1.

Table 1

| Item | | Present Invention | Comparison |
|---|---|---|---|
| | | quantity of liquid absorption (%) | |
| linseed oil | | 98 | 32 |
| mineral oil | *1) | 45 | 30 |
| water-based paint | *2) | 199 | 89 |
| oil-based paint | *3) | 210 | 142 |
| methanol | | 127 | 36 |

Notes to Table 1:

*1) paraffin-based process oil (PW-380 from Idemitsu Kosan Kabushiki Kaisha)

*2) "Water-Based Wide" from Nippon Paint Kabushiki Kaisha

*3) "Number One" from Nippon Paint Kabushiki Kaisha

The aggregates of the silicone rubber powder made up under the present invention were broken up easily, mixing with the liquids was easy. The aggregates of the silicone rubber powder made up under the comparison example were broken up only with difficulty, mixing with the liquids required a long period of time.

## Claims

1. A polyorganosiloxane elastomer powder having alcoholic hydroxyl group indirectly bonded to a portion of the silicon atoms in said polyorganosiloxane.

2. A method for the preparation of polyorganosiloxane elastomer powder having alcoholic hydroxyl group indirectly bonded to a portion of the silicon atoms in said polyorganosiloxane, the method consisting of first mixing
   (A) polyorganosiloxane having at least 2 silicon-bonded hydroxyl groups in each molecule,
   (B) organohydrogenpolysiloxane having at least 2 silicon-bonded hydrogen atoms in each molecule,

(C) curing catalyst, and
(D) alcoholic hydroxyl group-containing organosilane with the following general formula

$$HO - R - \overset{\overset{\displaystyle R^1_n}{|}}{Si} (OR^2)_{3-n}$$

where R is an alkylene group, $R^1$ is a monovalent hydrocarbon group, $R^2$ is the hydrogen atom or a monovalent hydrocarbon group which may be identical to or different from $R^1$ and n is an integer with a value of zero to 2) or the partial hydrolyzate thereof, to give a composition; then emulsifying the composition in water to prepare an emulsion in which said composition is dispersed as the discontinuous phase in the water; then bringing this emulsion into contact with a gas or liquid residing at a temperature higher than that of the emulsion; then allowing the composition to cure and separating the cured composition form the water.

**3.** The polyorganosiloxane elastomer powder having alcoholic hydroxyl group indirectly bonded to a portion of the silicon atoms in said polyorganosiloxane produced by the method of claim 2.